# EUROPEAN PATENT APPLICATION

(11) **EP 2 982 887 A1**
(43) Date of publication of application: **10.02.2016**
(21) Application number: 15179641.4
(22) Date of filing: 04.08.2015
(51) Int. Cl.: F16J 1/09, F02F 5/00, F16J 9/08

(54) **PISTON ASSEMBLY FOR A RECIPROCATING ENGINE**

(30) Priority: 05.08.2014 US 201414452515
(71) Applicant: General Electric Company, Schenectady, NY 12345 (US)
(72) Inventor: DONAHUE, Richard John, Waukesha, WI Wisconsin 53188 (US)
(74) Representative: Williams, Andrew Richard

(57) **Abstract**

A power cylinder system for a reciprocating engine (10) includes a piston (20) configured to move within a cylinder (26). The system includes a top-most groove (42) extending circumferentially about the piston beneath a top land of the piston and configured to support a top ring (44) having an inner circumferential face. A space is defined between a portion of the top-most groove and the inner circumferential face of the top ring while the top ring is positioned within top-most groove, and one or more channels formed in the top land are configured to enable transfer of combustion gases to the space. The system also includes a bottom-most groove (46) extending circumferentially about the piston and spaced apart from the top-most groove along an axial axis of the piston, and the bottom groove is configured to support a bottom ring (48) and is devoid of oil drains.

## Description

### BACKGROUND

The subject matter disclosed herein relates generally to reciprocating engines, and, more particularly to a piston assembly for a reciprocating engine.

A reciprocating engine (e.g., a reciprocating internal combustion engine) combusts fuel with an oxidant (e.g., air) to generate hot combustion gases, which in turn drive a piston (e.g., a reciprocating piston) within a cylinder. In particular, the hot combustion gases expand and exert a pressure against the piston that linearly moves the piston from a top portion to a bottom portion of the cylinder during an expansion stroke. The piston converts the pressure exerted by the combustion gases and the piston's linear motion into a rotating motion (e.g., via a connecting rod and a crankshaft coupled to the piston) that drives one or more loads, e.g., an electrical generator. The construction of the piston and associated structures (e.g., a piston assembly) can significantly impact exhaust emissions (e.g., unburned hydrocarbons) and engine efficiency, as well as lubricant (e.g., oil) consumption. Furthermore, the construction of the piston assembly can significantly affect friction between components of the reciprocating engine and the operating life of the reciprocating engine. Therefore, it would be desirable to improve the construction of the piston assembly.

### BRIEF DESCRIPTION

Certain examples commensurate in scope with the originally claimed invention are summarized below. These examples are not intended to limit the scope of the claimed invention, but rather these examples are intended only to provide a brief summary of possible forms of the invention. Indeed, the invention may encompass a variety of forms that may be similar to or different from the examples set forth below.

In one aspect, a power cylinder system for a reciprocating engine includes a piston configured to move within a cylinder. The system includes a top-most groove extending circumferentially about the piston beneath a top land of the piston and configured to support a top ring having an inner circumferential face. A space is defined between a portion of the top-most groove and the inner circumferential face of the top ring while the top ring is positioned within top-most groove, and one or more channels formed in the top land are configured to enable transfer of combustion gases to the space. The system also includes a bottom-most groove extending circumferentially about the piston and spaced apart from the top- most groove along an axial axis of the piston, and the bottom groove is configured to support a bottom ring and is devoid of oil drains.

In one aspect, a power cylinder system for a reciprocating engine includes a piston configured to move within a cylinder. The system includes a top- most groove and a bottom-most groove each extending circumferentially about the piston, wherein the top-most groove is positioned beneath a top land. The system includes a top ring disposed in the top-most groove, and one or more channels extend into an axially-facing upper surface of the top-most groove or an upper surface of the top ring to direct combustion gases to a space between an inner circumferential face of the top ring and a portion of the top-most groove. Each of the one or more channels has a first radius. The system includes a bottom ring positioned in the bottom-most groove, and a second radius of each of the oil drains extending along the bottom-most groove is less than the first radius of each of the one or more radial channels.

In one aspect, a power cylinder system for a reciprocating engine includes a cylinder having an inner wall and surrounding a cavity and a piston disposed within the cylinder and configured to move in a reciprocating manner within the cylinder. The system includes a top ring disposed within a top-most groove of the piston, and one or more channels open to the top-most groove are configured to transfer combustion gases through a first total flow area of the one or more radial channels to an inner circumferential face of the top ring to drive the top ring radially outward toward the inner wall of the cylinder as the piston moves within the cylinder. The system includes a bottom ring disposed within a bottom-most groove of the piston, wherein a second total flow area of oil drains open to the bottom groove is less than the first total flow area.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 is a schematic block diagram of an embodiment of a portion of a reciprocating engine system;
FIG. 2 is a cross-sectional view of an embodiment of a piston positioned within a cylinder;
FIG. 3 is a side view of a portion of an embodiment of a piston having radial channels formed in a top land of the piston and oil drains formed in a bottom groove of the piston;
FIG. 4 is a side view of a portion of an embodiment of a piston having radial channels formed in a top land of the piston, and the piston is devoid of oil drains;
FIG. 5 is a side cross-sectional view of a portion of an embodiment of a piston having three piston rings, a radial channel formed in a top land of the piston, and an oil drain formed in a bottom groove of the piston;
FIG. 6 is a side cross-sectional view of a portion of an embodiment of a piston having two piston rings, a radial channel formed in a top land of the piston, and an oil drain formed in a bottom groove of the piston; and
FIG. 7 is a side cross-sectional view of a portion of an embodiment of a piston having three piston rings, a radial channel formed in a top piston ring, and an oil drain formed in a bottom groove of the piston.

### DETAILED DESCRIPTION

One or more specific embodiments of the present invention will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present invention, the articles "a," "an," "the," and "said" are intended to mean that there are one or more of the elements. The terms "comprising," "including," and "having" are intended to be inclusive and mean that there may be additional elements other than the listed elements.

Power cylinder systems for reciprocating engines (e.g., reciprocating internal combustion engines) in accordance with the present disclosure may include one or more pistons each configured to move linearly within a cylinder (e.g., a liner) to convert pressure exerted by combustion gases and the piston's linear motion into a rotating motion to power one or more loads. Each piston may have a top annular groove (e.g., a top ring groove, a top-most ring groove, or a compression ring groove) extending circumferentially about the piston, and a top ring (e.g., a top piston ring or a top compression ring) may be disposed within the top groove. The top ring may be generally configured to block fuel and air, or a fuel-air mixture, from escaping from a combustion chamber and/or to facilitate maintenance of suitable pressure to enable expanding hot combustion gases to cause the reciprocating motion of the piston. Each piston may also have a bottom annular groove (e.g., a bottom ring groove, a bottom-most ring groove, or an oil ring groove) extending circumferentially about the piston, and a bottom ring (e.g., a bottom piston ring or an oil ring) may be disposed within the bottom groove. The oil ring may be generally configured to scrape a lubricant (e.g., oil) that lines an inner wall (e.g., inner circumferential wall) of the cylinder. In some embodiments, one or more additional annular grooves (e.g., additional ring grooves or additional compression ring grooves) may extend circumferentially about the piston, and one or more additional rings (e.g., additional rings or additional compression rings) may be disposed within the one or more additional ring grooves. Together, the top ring, the oil ring, and/or the additional ring form a ring pack and may generally control flow of combustion gases and/or lubricant (e.g., oil) within the engine.

During operation of the reciprocating engine, fuel and air combust in a combustion chamber, causing the piston to move within the cylinder. The combustion gases also exert a pressure against an outer circumferential face of the top ring, driving the top ring radially inward away from the inner wall of the cylinder. The disclosed embodiments may include one or more channels (e.g., radial channels) configured to transfer the combustion gases to a space adjacent to an inner circumferential face of the top ring such that the combustion gases exert a radially outward directed force on the inner circumferential face of the top ring. Advantageously, the one or more channels may also facilitate oil control within the cylinder. For example, the one or more channels may enable the top ring to maintain contact with the inner wall of the cylinder, and therefore, may enable the top ring to scrape oil along the inner wall of the cylinder. By way of another example, without the one or more channels, oil may accumulate in the top groove and may block the flow of the combustion gases to the space. In the disclosed embodiments, the one or more channels may enable oil to escape from the top groove (e.g., into the combustion chamber or along the inner wall of the cylinder). Thus, the one or more channels may facilitate flow of oil out of the top groove (e.g., by reducing adhesion of the oil to the top groove) and/or reduce residence time of oil within the top groove, which may generally improve oil consumption and blowby within the engine.

As discussed in more detail below, present embodiments may be devoid of oil drains or may have relatively small oil drains (e.g., a first radius of the one or more channels is greater than a second radius of the oil drains). Such a configuration may enable reliable, durable operation of the one or more channels. In some engines, large oil drains may be disposed on a bottom surface of the bottom groove to drain oil from the ring pack (e.g., oil scraped from the inner wall of the cylinder) into a sump below the piston. However, in certain engines, including engines with a wet sump, such large oil drains may also enable oil to travel from the sump into the ring pack (e.g., a reverse flow of oil), as well as provide a leak path for blowby. The reverse flow of oil from the sump may travel to the top groove, where the oil may impede the transfer of gases through the one or more channels and limit the reliability and effectiveness with which the one or more channels stabilize the top ring. Additionally, in some cases, oil accumulation within the one or more channels may result in carbon deposits that block the transfer of gases through the one or more channels. Accordingly, in accordance with certain embodiments discussed in detail below, a piston assembly devoid of oil drains or with relatively small oil drains may help to block or reduce the reverse flow of oil from the sump into the ring pack, and thus may enable reliable, effective operation of the one or more channels. The piston assembly having the features disclosed herein may effectively and efficiently control oil, while blocking radial ring collapse, as well as reducing blowby of unburned hydrocarbons, oil consumption, emissions, and/or friction between components, which may result in less wear and scuffing, for example.

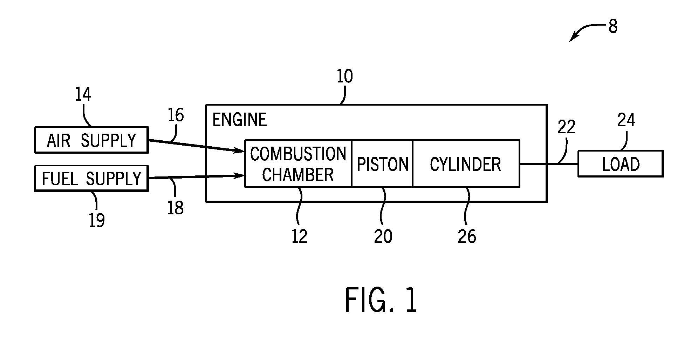

Turning to the drawings, FIG. 1 illustrates a block diagram of an embodiment of a portion of an engine driven power generation system 8. As described in detail below, the system 8 includes an engine 10 (e.g., a reciprocating internal combustion engine) having one or more combustion chambers 12 (e.g., 1, 2, 3, 4, 5, 6, 7, 8, 10, 12, 14, 16, 18, 20, or more combustion chambers 12). An air supply 14 is configured to provide a pressurized oxidant 16, such as air, oxygen, oxygen-enriched air, oxygen-reduced air, or any combination thereof, to each combustion chamber 14. The combustion chamber 14 is also configured to receive a fuel 18 (e.g., a liquid and/or gaseous fuel) from a fuel supply 19, and a fuel-air mixture ignites and combusts within each combustion chamber 14. The hot pressurized combustion gases cause a piston 20 adjacent to each combustion chamber 14 to move linearly within a cylinder 26 and convert pressure exerted by the gases into a rotating motion, which causes a shaft 22 to rotate. Further, the shaft 22 may be coupled to a load 24, which is powered via rotation of the shaft 22. For example, the load 24 may be any suitable device that may generate power via the rotational output of the system 10, such as an electrical generator. Additionally, although the following discussion refers to air as the oxidant 16, any suitable oxidant may be used with the disclosed embodiments. Similarly, the fuel 18 may be any suitable gaseous fuel, such as natural gas, associated petroleum gas, propane, biogas, sewage gas, landfill gas, coal mine gas, for example.

The system 8 disclosed herein may be adapted for use in stationary applications (e.g., in industrial power generating engines) or in mobile applications (e.g., in cars or aircraft). The engine 10 may be a two-stroke engine, three-stroke engine, four-stroke engine, five-stroke engine, or six-stroke engine. The engine 10 may also include any number of combustion chambers 12, pistons 20, and associated cylinders (e.g., 1-24). For example, in certain embodiments, the system 8 may include a large-scale industrial reciprocating engine having 4, 6, 8, 10, 16, 24 or more pistons 20 reciprocating in cylinders. In some such cases, the cylinders and/or the pistons 20 may have a diameter of between approximately 13.5 - 34 centimeters (cm). In some embodiments, the cylinders and/or the pistons 20 may have a diameter of between approximately 10-40 cm, 15-25 cm, or about 15 cm. In certain embodiments, the piston 20 may be a steel piston or an aluminum piston with a Ni- resist ring insert in a top ring groove of the piston 20. The system 8 may generate power ranging from 10 kW to 10 MW. In some embodiments, the engine 10 may operate at less than approximately 1800 revolutions per minute (RPM). In some embodiments, the engine 10 may operate at less than approximately 2000 RPM, 1900 RPM, 1700 RPM, 1600 RPM, 1500 RPM, 1400 RPM, 1300 RPM, 1200 RPM, 1000 RPM, 900 RPM, or 750 RPM. In some embodiments, the engine 10 may operate between approximately 750-2000 RPM, 900-1800 RPM, or 1000-1600 RPM. In some embodiments, the engine 10 may operate at approximately 1800 RPM, 1500 RPM, 1200 RPM, 1000 RPM, or 900 RPM. Exemplary engines 10 may include General Electric Company's Jenbacher Engines (e.g., Jenbacher Type 2, Type 3, Type 4, Type 6 or J920 FleXtra) or Waukesha Engines (e.g., Waukesha VGF, VHP, APG, 275GL), for example.

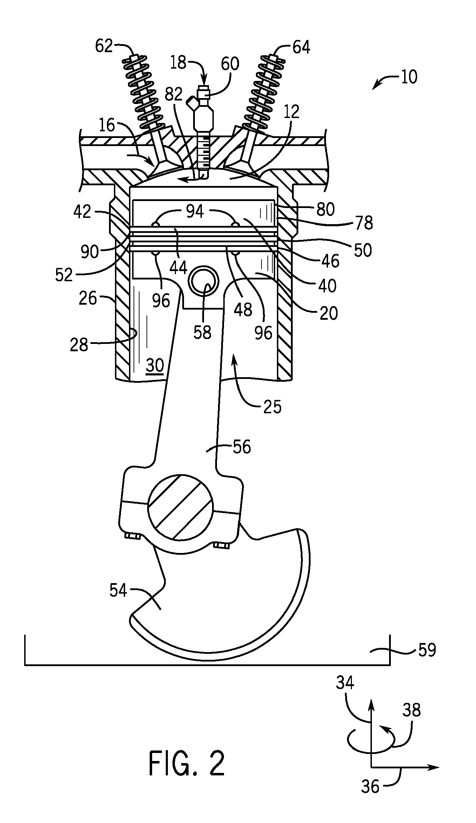

FIG. 2 is a side cross-sectional view of an embodiment of a piston assembly 25 having a piston 20 disposed within a cylinder 26 (e.g., engine cylinder) of the reciprocating engine 10. The cylinder 26 has an inner annular wall 28 defining a cylindrical cavity 30 (e.g., bore). The piston 20 may be defined by an axial axis or direction 34, a radial axis or direction 36, and a circumferential axis or direction 38. The piston 20 includes a top portion 40 (e.g., top land) and a top annular groove 42 (e.g., top groove, top-most groove, or top compression ring groove) extending circumferentially (e.g., in the circumferential direction 38) about the piston 20. A top ring 44 (e.g., a top piston ring or a top compression ring) may be positioned in the top groove 42.

The top ring 44 is configured to protrude radially outward from the top groove 42 to contact the inner annular wall 28 of the cylinder 26. The top ring 44 generally blocks the fuel 18 and the air 16, or a fuel-air mixture 82, from escaping from the combustion chamber 12 and/or facilitates maintenance of suitable pressure to enable the expanding hot combustion gases to cause the reciprocating motion of the piston 20. Furthermore, the top ring 44 of the present embodiments may be configured to facilitate scraping of oil, which coats the inner annular wall 28 and which controls heat and/or friction within the engine 10, for example.

As shown, the piston 20 includes a bottom annular groove 46 (e.g., bottom ring groove, bottom-most groove, or oil ring groove) extending circumferentially about the piston 20. A bottom ring 48 (e.g., bottom piston ring or oil ring) is disposed within the bottom groove 46. The oil ring 48 may protrude radially outward from the bottom groove 46 to contact the inner wall 28 of the cylinder 26. The oil ring 48 is generally configured to scrape oil that lines the inner wall 28 of the cylinder 26 and to control oil flow within the cylinder 26.

In some embodiments, one or more additional annular grooves 50 (e.g., additional ring grooves or additional compression ring grooves) may extend circumferentially about the piston 20 between from the top groove 42 and the bottom groove 46. In some embodiments, one or more additional rings 52 (e.g., additional rings or additional compression rings) may be disposed within each of the one or more additional ring grooves 50. The additional rings 52 may be configured to block blowby and/or to scrape oil from the inner annular wall 28 of the cylinder 26.

As shown, the piston 20 is attached to a crankshaft 54 via a connecting rod 56 and a pin 58. The crankshaft 54 translates the reciprocating linear motion of the piston 24 into a rotating motion. As the piston 20 moves, the crankshaft 54 rotates to power the load 24 (shown in FIG. 1), as discussed above. A sump 59 is disposed below or about the crankshaft 54. In certain embodiments, the sump 59 is a wet sump having an oil reservoir. As shown, the combustion chamber 14 is positioned adjacent to the top land 40 of the piston 24. A fuel injector 60 provides the fuel 18 to the combustion chamber 14, and a valve 62 controls the delivery of air 16 to the combustion chamber 14. An exhaust valve 64 controls discharge of exhaust from the engine 10. However, it should be understood that any suitable elements and/or techniques for providing fuel 18 and air 16 to the combustion chamber 14 and/or for discharging exhaust may be utilized. In operation, combustion of the fuel 18 with the air 16 in the combustion chamber 14 cause the piston 20 to move in a reciprocating manner (e.g., back and forth) in the axial direction 34 within the cavity 30 of the cylinder 26.

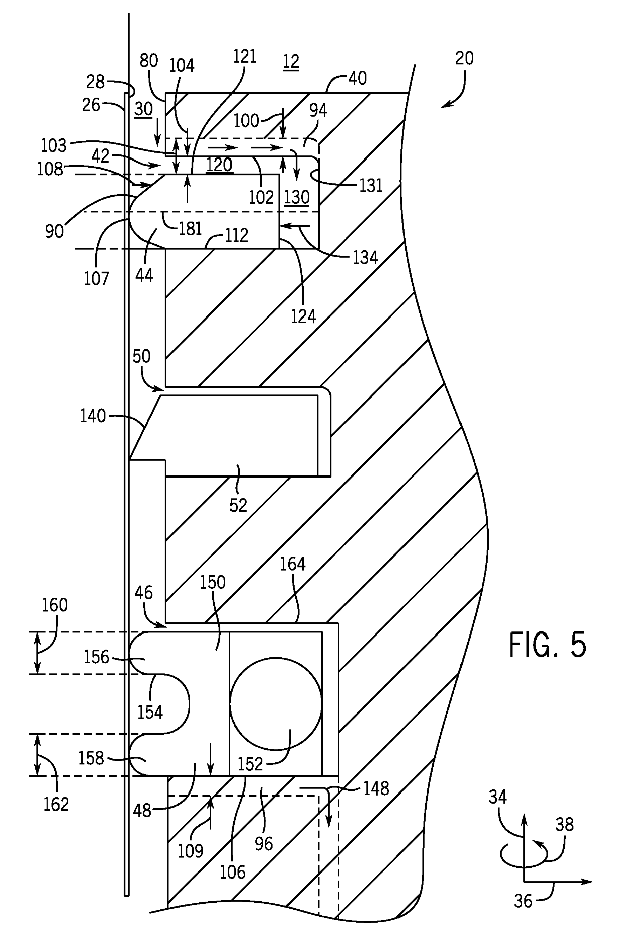

A clearance 78 (e.g., a radial clearance defining an annular space) is provided between the inner annular wall 28 of the cylinder 26 and an outer surface 80 (e.g., an annular surface) of the piston 20. As discussed above, it is desirable to maintain contact between the top ring 44 and the inner annular wall 28 of the cylinder 26 to block blowby as well as to enable the top ring 44 to scrape oil from the inner annular wall 28, for example. However, during operation of the engine 10, the combustion gases from the combustion chamber 12 contact an outer face 90 (e.g., a radially outer face or an outer circumferential face) of the top ring 44 and exert a force that drives the top ring 44 radially inward (e.g., along the radial axis 36) away from the inner wall 28 of the cylinder 26. Accordingly, present embodiments include one or more channels (e.g., passageways, troughs, grooves, or the like), such as one or ore radial channels 94, configured to transfer combustion gases to a space (shown in FIG. 5) adjacent to an inner circumferential surface (shown in FIG. 5) of the top ring 44. Such a configuration enables the one or more radial channels 94 to balance the pressure gradient across the top ring 44 (e.g., stabilize the top ring 44) and/or enables the top ring 44 to maintain contact with the inner annular wall 28 of the cylinder 26. As discussed in more detail below, relatively small oil drains 96, or a complete elimination of oil drains, in the piston assembly 25, may enable reliable, effective transfer of combustion gases through the one or more radial channels 94.

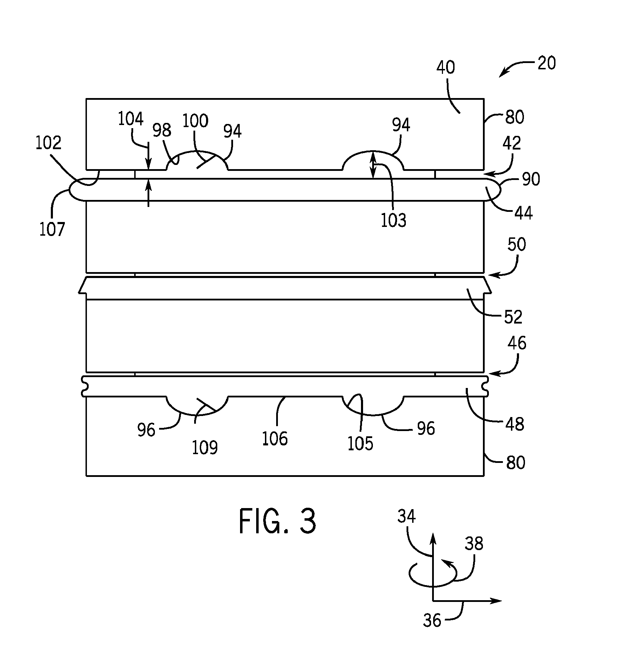

FIG. 3 is a side view of a portion of an embodiment of the piston 20 having radial channels 94 formed in the top land 40 of the piston 20. As shown, the radial channels 94 are formed at discrete locations about the piston 20 (e.g., discrete locations that are spaced apart circumferentially about the piston 20). In the illustrated embodiment, the radial channels 94 have a curved cross-section (e.g., have a curved wall 98) and a radial channel radius 100. The radial channels 94 are formed into or along an axially-facing surface 102 (e.g., an annular surface), which corresponds to both a bottom surface of the top land 40 and an upper surface (e.g., top surface or a top perimeter) of the top groove 42. The radial channels 94 may extend radially inward (e.g., in the radial direction 36) from the outer surface 80 (e.g., an outer annular surface) of the top land 40 of the piston 20. As shown, the radial channels 94 are open toward the top groove 42, and an axial distance 104 between the top ring 44 and the axially-facing surface 102 is increased along the radial channels 94 (e.g., as shown by a second axial distance 103 that is greater than the axial distance 104 and coincident with the radial channels 94). Thus, the axial distance between the top ring 44 and the axially-facing surface 102 varies circumferentially about the top ring 44. As discussed in more detail below, such a configuration facilitates transfer of the combustion gases from the cavity 30 along the radial channels 94 to a space (shown in FIG. 5), where the combustion gases exert a radially outward force (e.g., a pressure-induced biasing force) against an inner face (shown in FIG. 5) of the top ring 44. Thus, the radial channels 94 may facilitate control of the pressure gradient across the top ring 44 and may enable the top ring 44 to maintain contact with the inner annular wall 28 of the cylinder 26. For example, the radial channels 94 may help equalize the pressures axially above a sealing point 107, while generating a positive pressure differential axially below the sealing point 107 to urge the top ring 44 radially outward against the inner annular wall 28 of the cylinder 26.

In the illustrated embodiment, the oil ring 48 is disposed in the bottom groove 46. As shown, the piston assembly 25 includes the oil drains 96 formed at discrete locations about the piston 20 (e.g., discrete locations that are spaced apart circumferentially about the piston 20). The oil drains 96 may be circumferentially aligned with the radial channels 94 as shown, or the oil drains 96 and the radial channels 94 may be circumferentially staggered or offset from one another, for example. In the illustrated embodiment, the oil drains 96 have a curved cross-section (e.g., have a curved wall 105) and are formed into or along an axially-facing bottom surface 106 (e.g., an annular surface) of the bottom groove 46. The oil drains 96 may extend radially inward (e.g., in the radial direction 36) from the outer surface 80 (e.g., an outer annular surface) of the piston 20. As shown, the oil drains 96 are open toward the bottom groove 46.

In some embodiments, a total cross-sectional area of all of the oil drains 96 (e.g., sum of the cross-sectional areas of each oil drain 96 in the piston assembly 25) may be less than a total cross-sectional area of all of the radial channels 94 (e.g., sum of the cross-sectional areas of each radial channel 94 in the piston assembly 25). For example, in certain embodiments, a ratio of the total cross-sectional area of all the oil drains 96 to the total cross-sectional area of all the radial channels 94 may be approximately 0.1 to 0.9, 0.2 to 0.8, 0.3 to 0.7, or 0.4 to 0.5. The cross-sectional area of each oil drain 96 is based on an oil drain radius 109, while the cross-sectional area of each radial channel 94 is based on the radial channel radius 100. More particularly, the total cross-sectional area of all of the oil drains 96 is based on the oil drain radius 109 of each oil drain 96 and the total number of oil drains 96, while the total cross- sectional area of all of the radial channels 94 is based on the radial channel radii 100 of each radial channel 94 and the total number of radial channels 94. Such a configuration may limit reverse flow of oil toward the radial channels 94 through the oil drains 96, while also providing a path for oil that is scraped from the inner wall 26 of the cylinder 28 to drain into the sump 59.

Additionally or alternatively, in certain embodiments, the oil drain radius 109 of each of the oil drains 96 may be less than the radial channel radius 100 of each the radial channels 94. In some such cases, the oil drain radius 109 may be less than approximately 2 millimeters (mm) and the radial channel radius 100 may be greater than approximately 2 mm. In some such cases, the oil drain radius 109 may be less than approximately 0.5 mm, 1 mm, 1.5 mm, 2.5 mm, or 3 mm and the radial channel radius 100 may be greater than approximately 0.5 mm, 1mm, 1.5 mm, 2.5 mm, or 3 mm, for example. In certain embodiments, a ratio of the oil drain radius 109 to the radial channel radius 100 may be approximately 0.1 to 0.9, 0.2 to 0.8, 0.3 to 0.7, or 0.4 to 0.5.

Additionally or alternatively, the oil drains 96 may have a first total flow volume based on a product of the oil drain radius 109, an oil drain length (shown in FIG. 5), and a number of oil drains 96 (e.g., two oil drains 96 are shown in FIG. 3) provided in the piston 20. Additionally, the radial channels 94 have a second total flow volume based on a product of the radial channel radius 100, a radial channel length (shown in FIG. 5), and a number of radial channels 94 (e.g., two radial channels 94 are shown in FIG. 3) provided in the piston 20. In certain embodiments, the first total flow volume of the oil drains 96 is less than the second total flow volume of the radial channels 94. For example, in certain embodiments, a ratio of the first total flow volume of the oil drains 96 to the second total flow volume of the radial channels 94 may be approximately 0.1 to 0.9, 0.2 to 0.8, 0.3 to 0.7, or 0.4 to 0.5.

By way of another example, additionally or alternatively, in some embodiments, a total number of the oil drains 96 may be less than a total number of the radial channels 94 in the piston assembly 25. In some such cases, the number of oil drain radius 96 may be less than approximately 10, 9, 8, 7, 6, 5, 4, 3, or 2 and the number of radial channels 94 may be greater than approximately 10, 9, 8, 7, 6, 5, 4, 3, or 2. In certain embodiments, a ratio of the number of the oil drains 96 to the number of the radial channels 94 may be approximately 0.1 to 0.9, 0.2 to 0.8, 0.3 to 0.7, or 0.4 to 0.5. As noted above, the relatively small size or dimensions, such as the smaller radius or total cross-sectional area, of the oil drains 96 may enable the radial channels 94 to reliably, effectively stabilize the top ring 44.

As shown in FIG. 3, the piston 20 may include the additional groove 50 extending circumferentially about the piston 20 and positioned between the top groove 42 and the bottom groove 46. The additional ring 52 may be disposed within the additional groove 50. The additional ring 52 may have any of a variety of configurations and functions. For example, in some embodiments, the additional ring 52 is a compression ring that is configured to contact the inner annular wall 28 of the cylinder 26 to block blowby and/or to scrape oil from the inner annular wall 28 of the cylinder 26. As discussed in more detail below, in some embodiments, the additional groove 50 and the additional ring 52 are not provided, and the top groove 42 and the bottom groove 46 are the only grooves that extend circumferentially about the piston 20 and that are configured to support rings (e.g., the top ring 44 and the oil ring 48). In some such cases, together the top ring 44 and the low-tension oil ring 48 may effectively control oil and/or adequately block blowby without the additional ring 52.

Although the radial channels 94 and the oil drains 96 are shown as having a curved cross-section, it should be understood that the radial channels 94 or the oil drains 96 may have any suitable cross-section (e.g., rectangular, triangular, curved with varying curvature, or the like) or configuration that facilitates transfer of the combustion gases in the manner disclosed herein. Furthermore, although multiple radial channels 94 and multiple oil drains 96 are illustrated, it should be understood that any suitable number of radial channels 94 and/or oil drains 96 may be provided, such as 1, 2, 3, 4, 5, 6, 7, 8, 9, 10, or more. Additionally, the radial channels 94 and the oil drains 96 may be distributed in any suitable manner, including with a uniform circumferential spacing about the piston 20.

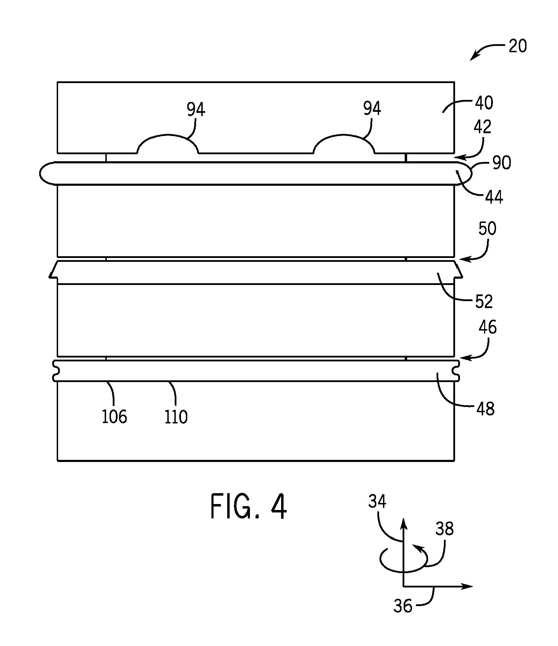

FIG. 4 is a side view of a portion of an embodiment of the piston 20 having radial channels 94 formed in the top land 40 of the piston 20. As shown, the piston assembly 25 is devoid of oil drains 96 (shown in FIG. 3). In the illustrated embodiment, the axially-facing bottom surface 106 of the bottom groove 46 is generally uniform (e.g., flat) about the circumference of the piston 20. In such cases, the axially-facing bottom surface 106 of the bottom groove 46 contacts a bottom surface 110 of the oil ring 48 about the circumference of the piston 20. Thus, no radially inward grooves (e.g., passageways or channels) or flow paths are provided in the axially-facing bottom surface 106 of the bottom groove 46, a bottom surface 110 of the oil ring 48, or the like. In the illustrated embodiment, there is no flow path extending radially inwardly from the outer surface 80 of the piston 20 and extending axially through the piston 20 to enable transfer of oil to or from the sump 59. The lack of oil drains 96 may limit the reverse flow of oil from the sump 59 to the radial channels 94, and thus, may enable the radial channels 94 to reliably, effectively stabilize the top ring 44. The lack of oil drains 96 may also reduce blowby.

FIG. 5 is a side cross-sectional view of a portion of an embodiment of the piston 20 having three piston rings (e.g., the top ring 44, the oil ring 48, and the additional ring 52), one radial channel 94 formed in the top land 40 of the piston 20, and one oil drain 96 formed in the axially-facing bottom surface 106 of the bottom groove 46. In the illustrated embodiments, the radial channels 94 are formed in the axially-facing surface 102. The radial channels 94 extend radially inwardly (e.g., along the radial axis 36) from the outer surface 80 of the top land 40. During operation of the engine 10, combustion gases exert pressure on the outer face 90 of the top ring 44 and generate a radially inward force 108 that drives the top ring 44 away from the inner annular wall 28 of the cylinder 26.

Although a gap 120 (e.g., a top groove clearance) is provided between a top face 121 (e.g., an axially upper face) of the top ring 44 and the axially-facing surface 102 of the piston 20 to enable some combustion gases to flow within the top groove 42, the first axial distance 102 across the gap 120 is desirably configured to minimize ring lift and flutter. Thus, oil may accumulate in the relatively small gap 120 and block the flow of combustion gases through the top groove 42, and the gap 120 may not enable efficient, reliable transfer of the combustion gases to an inner face 124 (e.g., a radially inner face or an inner circumferential face) of the top ring 44, if the gap 120 is blocked with oil. Accordingly, without the disclosed radial channels 94, oil may accumulate in the top groove 42 and a large pressure differential may exist across the top ring 44 (e.g., between the outer face 90 and the inner face 124), if the gap 120 is blocked with oil. For example, without the disclosed radial channels 94, oil may adhere to the top groove 42 and block the flow of combustion gases, and thus, the pressure adjacent to the outer face 90 may be greater than the pressure adjacent to the inner face 124. In such cases, the top ring 44 may be susceptible to radial ring collapse, which in turn results in increased oil consumption and blowby, for example.

In the present embodiments, the radial channels 94 may be configured to facilitate transfer of the combustion gases to a space 130 (e.g., an annular space) adjacent to the inner face 124 of the top ring 44 and an inner wall 131 (e.g., an inner annular wall) of the top groove 42, which may provide increased stability of the top ring 44. The combustion gases in the space 130 may exert a radially-outward force 134 to balance or to counter the radially-inward force 108, and the pressure across the top ring 44 may be substantially equal or otherwise controlled to block radial ring collapse and to maintain contact between the top ring 44 and the inner annular wall 28 of the cylinder 26, for example.

Additionally, as shown, the outer surface 90 of the top ring 44 is configured to contact the inner annular wall 28 to form the sealing point 107. Such a configuration may advantageously enable the top ring 44 to scrape oil from the inner annular wall 28 of the cylinder 26 during operation of the engine 10. Additionally, oil is generally a viscous and adhesive liquid that may adhere to the piston 20, including the top groove 42, in certain circumstances. The radial channels 94 provide the larger axial distance 103 and overall larger crevice volume between the top ring 44 and the axially-facing surface 102, as well as lower surface area to volume ratio. Such a configuration may reduce adhesion and generally facilitate flow of the oil out of the top groove 42 (e.g., into the combustion chamber 12 or along the inner annular wall 28 of the cylinder 26) and therefore, may improve oil control and reduce oil consumption within the engine 10.

To limit oil in the radial channels 94 and to enable reliable transfer of combustion gases through the radial channels 94, the oil drains 96 may be sufficiently small (or absent, as shown in FIG. 4) to limit or to block reverse transfer of oil from the sump 59 toward the top ring 44. For example, the total cross-sectional area of the oil drains 96 may be less than the total cross-sectional area of the radial channels 94, as discussed above. Additionally or alternatively, one or more of the oil drain radius 109, a total flow volume, or a number of oil drains 96 may be less than corresponding features of the radial channels 94. As discussed above. In the illustrated embodiment, the oil drains 96 are formed in the axially-facing bottom surface 106 of the bottom groove 46. However, the oil drains 96 may be formed in any suitable surface, such as a bottom surface of the oil ring 48. The oil drains 96 extend radially-inwardly (e.g., along the radial axis 36) from the outer surface 80 of the piston 20. During operation of the engine 10, the oil ring 48 scrapes oil from the inner wall 28 of the cylinder 26, and the oil drains 96 may generally facilitate transfer of the scraped oil into the sump 59 as shown by arrow 148.

The oil ring 48 may have any suitable shape or configuration. As shown, the oil ring 48 is a two-piece oil ring having a body 150 and a spring 152. The body 150 includes an outer face 154 (e.g., a radially outer face or an outer circumferential face). In the illustrated embodiment, the oil ring 48 has a U-shaped cross-section having a first annular protrusion 156 (e.g., a first rail) and a second annular protrusion 158 (e.g., a second rail) that are configured to engage and to scrape oil from the inner annular wall 28 of the cylinder 26. The first annular protrusion 156 has a first width 160 (e.g., a width configured to contact the inner annular wall 28 of the cylinder 26) and the second annular protrusion 158 has a second width 162 (e.g., a width configured to contact the inner annular wall 28 of the cylinder 26). The first width 160 and the second width 162 may be generally the same or may be different from one another. The spring 152 is coupled to the body 150 of the oil ring 48 and is configured to urge the body 150 radially outward toward the inner annular wall 28 of the cylinder 26 and/or axially outward against the bottom groove 46. The oil ring 48 may be configured to contact the axially-facing bottom surface 106 of the bottom groove 46 and/or an axially-facing upper surface 164 of the bottom groove 46.

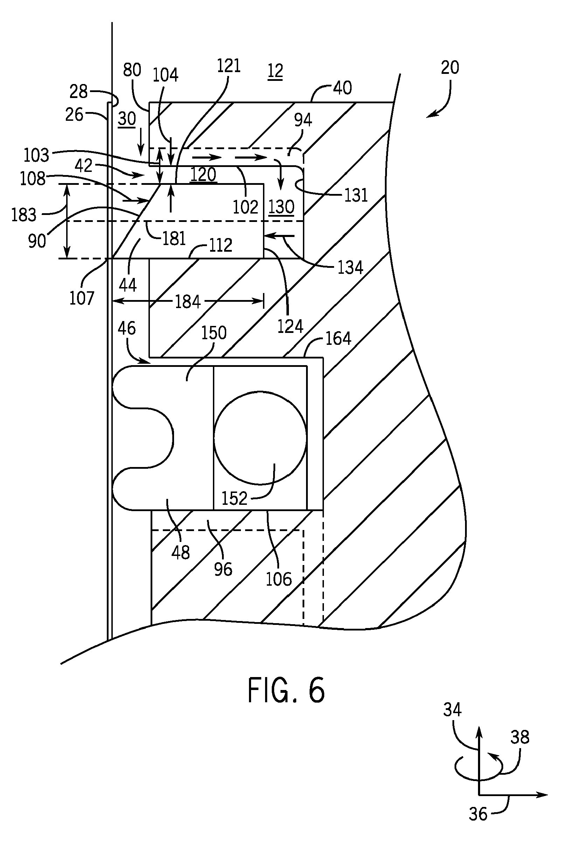

As shown, the piston assembly 25 includes one additional ring 52. The additional ring 25 is positioned in the additional groove 50 between the top groove 42 and the bottom groove 46. The additional ring 52 may have any suitable shape or configuration. As shown, the additional ring 52 includes a tapered outer face 140 (e.g., a radially outer face or an outer circumferential face). The additional ring 52 may generally be configured to block blowby, to scrape oil from the inner annular wall 28 of the cylinder 26, and/or to control an amount of oil that reaches the top ring 44. Additionally, in some embodiments having three rings, the bottom groove 48 may not support the oil ring 48 (e.g., having the body 150 and the spring 152), but rather, may support a second compression ring similar in form to the top ring 44 or the additional ring 52. As discussed below, in some embodiments in accordance with the present disclosure, the additional ring 52 may not be provided. Rather, the top ring 44 and the oil ring 48 may together provide adequate oil control without the additional ring 52. FIG. 6 illustrates a portion of an embodiment of the piston 20 having two piston grooves (e.g., the top groove 42 and the bottom groove 46), one radial channel 94 formed in the top land 40 of the piston 20, and one oil drain 96 formed in the axially-facing bottom surface 106 of the bottom groove 46. As shown, the oil drain 96 is provided in the axially-facing bottom surface 106 of the bottom groove 46. The additional groove 50 and the additional ring 52 are not provided, and the top groove 42 and the bottom groove 46 are the only grooves that extend circumferentially about the piston 20 and that are configured to support rings (e.g., the top ring 44 and the oil ring 48). In such cases, together the top ring 44 and the oil ring 48 may effectively scrape oil from the inner annular wall 28 and/or adequately block blowby without the additional ring 52.

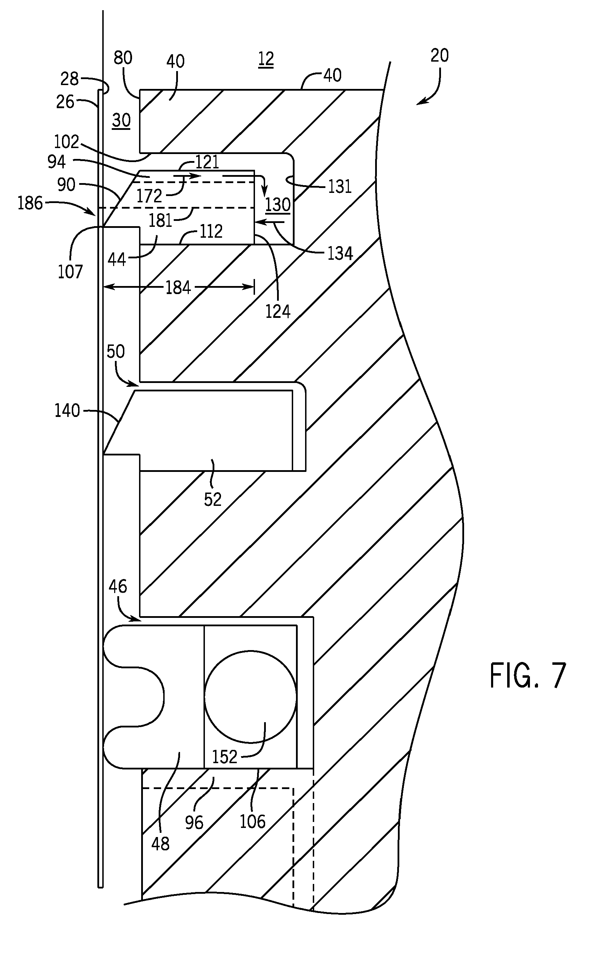

In embodiments having only two grooves, the top groove 42 and the bottom groove 46 may be separated by any suitable distance. Additionally, in some embodiments having only two grooves, the bottom groove 48 may not support the oil ring 48 (e.g., having the body 150 and the spring 152), but rather, may support a second compression ring similar in form to the top ring 44 or the additional ring 52 (shown in FIG. 5). Furthermore, in embodiments having only two grooves, it may be particularly desirable for the piston assembly 25 to be devoid of oil drains 96 (shown in FIG. 4) to reduce blowby. In other embodiments having only two grooves, the piston assembly 25 may have oil drains 96 having dimensions smaller than the radial channels 94, as discussed in detail above. Embodiments having only two grooves may have any of the features set forth above, or set forth below with respect to FIG. 7.

FIG. 7 illustrates a side cross-sectional view of a portion of an embodiment of the piston 20 having one radial channel 94 formed in the top ring 44 and one oil drain 96 formed in the bottom groove 46. In certain embodiments, radial channels 94 may be formed along the top face 121 of the top ring 44. Such channels may be provided in addition to or as an alternative to the radial channels 94 formed in the top land 40 of the piston 20, as shown in FIGS. 2-6, for example.

As shown, the radial channels 94 formed in the top ring 44 may extend radially inward (e.g., in the radial direction 36) from the outer face 90 to the inner face 124 of the top ring 44. The radial channels 94 may increase the axial distance 102 between the top face 121 of the top ring 44 and the axially-facing surface 102 of the top groove 42 along the radius 100 coincident with the radial channel 94. Thus, the radial channel 94 may facilitate flow of the combustion gases from the cavity 30 to the space 130 adjacent to the inner face 124, as shown by arrow 172. As discussed above, the transfer of gases to the space 130 may control the pressure differential between the annular outer face 90 and the inner face 124 of the top ring 44, and thus enable the top ring 44 to maintain contact with the inner wall 28 of the cylinder 26.

As set forth above, the radial channels 94 may help to equalize pressures or create pressure differential between the inner face 124 of the top ring 44 and the outer face 90 of the top ring 44, thereby helping to bias the top ring 44 radially-outward against the cylinder 26 to block radial ring collapse and/or blowby, for example. Additionally, the top ring 44 and/or the radial channels 94 may be constructed to block radial ring collapse and blowby, while also providing oil control within the engine 10. Such a configuration may benefit from the use of the relatively small oil drains 96 (e.g., smaller than the radial channels 94, as discussed above), or a lack of a oil drains 96, which advantageously reduce reverse flow of oil from the sump 59 toward the radial channels 94 during operation of the engine 10 and/or reduce blowby, for example.

Additionally, in some embodiments having the radial channels 94 positioned in the top ring 44, the additional groove 50 and the additional ring 52 are not provided (as shown in FIG. 6). Thus, the top groove 42 and the bottom groove 46 are the only grooves that extend circumferentially about the piston 20 and that are configured to support rings (e.g., the top ring 44 and the oil ring 48), as shown in FIG. 6. In such cases, together the top ring 44 and the oil ring 48 may effectively scrape oil from the inner annular wall 28 and/or adequately block blowby without the additional ring 52. Embodiments having only the radial channels 94 positioned in the top ring 44 may have any of the features set forth above, or set forth below.

Additionally, as shown in FIGS. 5-7, the top ring 44 may have an asymmetrical profile (e.g., an asymmetrical cross-section) about a radial axis 181, such as a barrel-shaped profile, a tapered profile, or partially tapered profile (e.g., a conical profile), in certain embodiments. In such cases, the outer face 90 of the top ring 44 may be configured to effectively and efficiently scrape oil from an inner wall of the cylinder during a down-stroke (e.g., an expansion stroke) of the piston. Although shown differently in each of FIGS. 5-7, it should be understood that the top ring 44 may have any suitable profile, including any of the profiles shown in FIGS. 5- 7. For example, as shown in FIG. 5, the top ring 44 has an asymmetrical barrel- shaped (e.g., curved) outer face 90. By way of an additional example, as shown in FIG. 6, the top ring 44 is linearly tapered across a height 183 of the top ring 44. Thus, a radius 184 (and thus a diameter) of the top ring 44 increases between the top face 121 and the bottom face 112 of the top ring 44. The smallest radius 184 of the top ring 44 coincides with the top face 121, while the largest radius 184 of the top ring 44 coincides with the bottom face 112. In such a configuration, the outer surface 90 is configured to contact the inner annular wall 28 to form the sealing point 107 at or proximate to the bottom face 112 of the top ring 44. As shown in FIG. 7, the top ring 44 has a partially-tapered outer face 90, wherein the radius 184 of the top ring 44 increases between the top face 121 and an intermediate region 186 that forms the annular seal 107. Although pressure against the barrel-shaped profile, the linearly tapered profile, or partially tapered profile may urge the top ring 44 radially-inwardly, the radial channels 94 in the axially-facing surface 102 of the top groove 42 and/or the radial channels 94 in the top ring 44 may be configured to transfer combustion gases to the space 130 to control the pressure across the top ring 44, to stabilize the top ring 44, and/or to control oil, in the manner set forth above. For example, the radial channels 100 may help equalize the pressures axially above the sealing point 114, while generating a positive pressure differential axially below the sealing point 114 to urge the top ring 44 radially outward against the inner annular wall 28 of the cylinder 26.

Beneficial effects of the disclosed embodiments include providing systems for controlling the distribution of combustion gases within the engine 10 via channels, such as radial channels 94. For example, the combustion gases may exert pressure against the outer face 90 of the top ring 44 of the piston assembly. Radial channels 94 formed in the top land 40 or in the top ring 44 may transfer the combustion gases to the space 130 adjacent to the inner surface 124 of the top ring 44, thus controlling a pressure gradient between the outer face 90 and the inner face 124 and enabling the top ring 44 to maintain contact with the inner wall 28 of the cylinder 26. The disclosed embodiments also control oil within the engine 10 through use of relatively small oil drains 96 (e.g., smaller than the radial channels 94) or a lack of oil drains 96. Such configurations may advantageously limit oil in proximity to the radial channels 94, thus providing reliable, durable transfer of combustion gases through the radial channels 94. The disclosed embodiments may advantageously reduce oil consumption, emissions, blowby, radial ring collapse, and/or friction within the engine 10, for example.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A power cylinder system for a reciprocating engine, comprising:
   a piston configured to move within a cylinder of the reciprocating engine;
   a top-most groove extending circumferentially about the piston beneath a top land of the piston and configured to support a top ring having an inner circumferential face, wherein a space is defined between a portion of the top-most groove and the inner circumferential face of the top ring while the top ring is positioned within top-most groove;
   a bottom-most groove extending circumferentially about the piston and spaced apart from the top-most groove along an axial axis of the piston, wherein the bottom-most groove is configured to support a bottom ring and is devoid of oil drains; and
   one or more channels formed in the top land and configured to enable transfer of combustion gases to the space between the portion of the top-most groove and the inner circumferential face of the top ring.
2. The system of clause 1, wherein at least some of the one or more channels extend radially in an axially-facing surface of the top land.
3. The system of clause 1 or 2 comprising the top ring, wherein one or more ring channels extend radially in an upper surface of the top ring at one or more discrete locations, and the one or more ring channels are configured to enable transfer of combustion gases to the space between the portion of the top-most groove and the inner circumferential face of the top ring.
4. The system of any preceding clause, wherein the top-most groove and the bottom- most groove are the only ring-support grooves extending circumferentially about the piston.
5. The system of any preceding clause, wherein the bottom ring is an oil ring having a spring that is configured to urge the oil ring radially outward toward an inner circumferential wall of the cylinder.
6. The system of any preceding clause, comprising an intermediate groove extending circumferentially about the piston between the top-most groove and the bottom-most groove, wherein a third ring is disposed within the intermediate groove.
7. A power cylinder system for a reciprocating engine, comprising:
   a piston configured to move within a cylinder in the reciprocating manner;
   a top-most groove and a bottom-most groove each extending circumferentially about the piston, wherein the top-most groove is positioned beneath a top land;
   a top ring disposed in the top-most groove, wherein a channel extends into an axially-facing upper surface of the top-most groove or an upper surface of the top ring, the channel is configured to direct combustion gases to a space between an inner circumferential face of the top ring and a portion of the top-most groove, and the channel has a first radius; and
   a bottom ring positioned in the bottom-most groove, wherein a second radius of an oil drains of the bottom-most groove is less than the first radius.
8. The system of any preceding clause, wherein the channel extends radially in the upper surface of the top ring or the axially-facing upper surface of the top-most groove.
9. The system of any preceding clause, wherein the first radius is less than approximately 2 millimeters.
10. The system of any preceding clause, wherein a ratio of the second radius to the first radius is between approximately 0.1 and 0.9.
11. The system of any preceding clause, comprising multiple channels having a first total cross-sectional area and one or more oil drains having a second total cross-sectional area, wherein the first total cross-sectional area is greater than the second total cross-sectional area.
12. The system of any preceding clause, comprising multiple channels each having the first radius and one or more oil drains each having the second radius, wherein a first number of the one or more channels is greater than a second number of the one or more oil drains.
13. A power cylinder system for a reciprocating engine, comprising: a cylinder having an inner wall surrounding a cavity;
   a piston disposed within the cylinder and configured to move in a reciprocating manner within the cylinder;
   a top ring disposed within a top-most groove of the piston, wherein one or more channels open to the top-most groove have a first total cross-sectional area and are configured to transfer combustion gases to an inner circumferential face of the top ring to drive the top ring radially outward toward the inner wall of the cylinder as the piston moves within the cylinder; and
   a bottom ring disposed within a bottom-most groove of the piston, wherein a second total cross-sectional area of oil drains open to the bottom groove is less than the first total cross-sectional area.
14. The system of any preceding clause, wherein a first radius of at least one of the one or more channels is greater than a second radius of at least one of the oil drains.
15. The system of any preceding clause, wherein the first radius is less than approximately 2 millimeters.
16. The system of any preceding clause, wherein a ratio of the second total cross-sectional area to the first total cross-sectional area is between approximately 0.1 and 0.9.
17. The system of any preceding clause, wherein the system is devoid of oil drains open to the bottom groove.
18. The system of any preceding clause, wherein a first number of the one or more channels is greater than a second number of the oil drains.
19. The system of any preceding clause, wherein the bottom ring is a compression ring having an asymmetrical profile.
20. The system of any preceding clause, wherein the bottom ring is biased radially outward against the inner wall of the cylinder by one or more springs.

## Claims

1. A power cylinder system for a reciprocating engine, comprising:
a piston configured to move within a cylinder of the reciprocating engine;
a top-most groove extending circumferentially about the piston beneath a top land of the piston and configured to support a top ring having an inner circumferential face, wherein a space is defined between a portion of the top-most groove and the inner circumferential face of the top ring while the top ring is positioned within top-most groove;
a bottom-most groove extending circumferentially about the piston and spaced apart from the top-most groove along an axial axis of the piston, wherein the bottom-most groove is configured to support a bottom ring and is devoid of oil drains; and
one or more channels formed in the top land and configured to enable transfer of combustion gases to the space between the portion of the top-most groove and the inner circumferential face of the top ring.

2. The system of claim 1, wherein at least some of the one or more channels extend radially in an axially-facing surface of the top land.

3. The system of either of claim 1 or 2, comprising the top ring, wherein one or more ring channels extend radially in an upper surface of the top ring at one or more discrete locations, and the one or more ring channels are configured to enable transfer of combustion gases to the space between the portion of the top-most groove and the inner circumferential face of the top ring.

4. The system of any preceding claim, wherein the top-most groove and the bottom- most groove are the only ring-support grooves extending circumferentially about the piston.

5. The system of any preceding clause, wherein the bottom ring is an oil ring having a spring that is configured to urge the oil ring radially outward toward an inner circumferential wall of the cylinder.

6. The system of any preceding claim, comprising an intermediate groove extending circumferentially about the piston between the top-most groove and the bottom-most groove, wherein a third ring is disposed within the intermediate groove.

7. A power cylinder system for a reciprocating engine, comprising:
a piston configured to move within a cylinder in the reciprocating manner;
a top-most groove and a bottom-most groove each extending circumferentially about the piston, wherein the top-most groove is positioned beneath a top land;
a top ring disposed in the top-most groove, wherein a channel extends into an axially-facing upper surface of the top-most groove or an upper surface of the top ring, the channel is configured to direct combustion gases to a space between an inner circumferential face of the top ring and a portion of the top-most groove, and the channel has a first radius; and
a bottom ring positioned in the bottom-most groove, wherein a second radius of an oil drains of the bottom-most groove is less than the first radius.

8. The system of claim 7, wherein the channel extends radially in the upper surface of the top ring or the axially-facing upper surface of the top-most groove.

9. The system of either of claim 7 or 8, wherein the first radius is less than approximately 2 millimeters.

10. The system of any of claims 7 to 9, wherein a ratio of the second radius to the first radius is between approximately 0.1 and 0.9.

11. The system of any of claims 7 to 10, comprising multiple channels having a first total cross-sectional area and one or more oil drains having a second total cross-sectional area, wherein the first total cross-sectional area is greater than the second total cross-sectional area.

12. The system of any of claims 7 to 11, comprising multiple channels each having the first radius and one or more oil drains each having the second radius, wherein a first number of the one or more channels is greater than a second number of the one or more oil drains.

13. A power cylinder system for a reciprocating engine, comprising: a cylinder having an inner wall surrounding a cavity;
a piston disposed within the cylinder and configured to move in a reciprocating manner within the cylinder;
a top ring disposed within a top-most groove of the piston, wherein one or more channels open to the top-most groove have a first total cross-sectional area and are configured to transfer combustion gases to an inner circumferential face of the top ring to drive the top ring radially outward toward the inner wall of the cylinder as the piston moves within the cylinder; and
a bottom ring disposed within a bottom-most groove of the piston, wherein a second total cross-sectional area of oil drains open to the bottom groove is less than the first total cross-sectional area.

14. The system of claim 13, wherein a first radius of at least one of the one or more channels is greater than a second radius of at least one of the oil drains.

15. The system of claim 14, wherein the first radius is less than approximately 2 millimeters.
